(19) Europäisches Patentamt
European Patent Office
Office européen des brevets

(11) EP 3 498 797 B1

(12) # EUROPEAN PATENT SPECIFICATION

(45) Date of publication and mention of the grant of the patent:
**11.08.2021 Bulletin 2021/32**

(51) Int Cl.:
***C09J 7/38*** *(2018.01)* ***C09J 11/06*** *(2006.01)*

(21) Application number: **17207590.5**

(22) Date of filing: **15.12.2017**

(54) **ADHESIVE TAPE FOR BONDING TEXTILE MATERIALS**

KLEBEBAND FÜR DIE VERKLEBUNG VON TEXTILMATERIALIEN

BANDE ADHÉSIVE POUR COLLER DES MATIÈRES TEXTILES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**19.06.2019 Bulletin 2019/25**

(73) Proprietors:
- **Henkel AG & Co. KGaA**
  **40589 Düsseldorf (DE)**
- **Henkel IP & Holding GmbH**
  **40589 Düsseldorf (DE)**

(72) Inventors:
- **OLLAGNIER, Cecile**
  **Co. Dublin (IE)**
- **SCHNEIDER, Anja**
  **40547 Düsseldorf (DE)**
- **VOß, Andrea**
  **42579 Heiligenhaus (DE)**

(74) Representative: **Henkel IP Department**
**c/o Henkel AG & Co. KGaA**
**Henkelstraße 67**
**40589 Düsseldorf (DE)**

(56) References cited:
**EP-A1- 3 127 982**
**WO-A1-2005/068521**
**US-A1- 2009 258 225**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF THE INVENTION

The present invention is directed to a tape which may be used to join or repair textile materials. More particularly, the present invention is directed to a tape on which is disposed a pressure sensitive adhesive layer, which adhesive layer is capable of providing a durable bond between textile materials.

### BACKGROUND TO THE INVENTION

In everyday life it is not always practical for a consumer to simply replace textile materials, such as clothing, which has become worn, frayed, ripped, threadbare or tattered. Similarly, there are a plethora of circumstances where a consumer - or even an industrial manufacturer - may need to embroider an existing textile material with emblems, school and team insignia, brand identifications and the like. It is thus a reality that one needs a facility to repair, rejuvenate or embroider textile materials.

Broadly, the methodologies for such repair or modification include hand sewing, machine sewing, bonding with heat-activated thermoplastic adhesives, sonic welding, direct embroidery and heat activated transfer. Of these, sewing and hand stitching of the textile material currently represent the most accessible methodologies to the average, domestic consumer. The present inventors consider this highly disadvantageous.

Sewing machines are typically heavy and therefore cumbersome to move. In use, the machines require a flat, stable surface at an appropriate height for working: any irregularity or instability of the surface can lead to movement of the machine in use which can, in turn, result in stitching defects and / or damage to the surface. And, of course, sewing machines employ sharp, fast moving needles which can be hazardous to either a distracted user or a child.

Whilst sewing by hand does not present the issue of fast-moving needles, sharp thin objects are dangerous of themselves: they may penetrate the skin and flesh of the consumer and it is not unknown for children to ingest such needles, as documented *inter alia* in https://www.ncbi.nlm.nih.gov/pmc/articles/PMC3364664/.

Alternatives to sewing and hand stitching have been proposed in the art as described below. However, it is contended that a need remains to provide a method for adhesively bonding textile products, which requires no dedicated equipment, which is less time consuming and labor intensive than affixing by sewing, which can be performed safely by both adults and children and which can yield textile bonds capable of withstanding repeated washing.

DE 29922950 U1 (Coroplast Fritz Mueller GMBH) describes an adhesive tape consisting of a band-shaped textile carrier (1) on which is applied an adhesive coating (2): that band-shaped carrier (1) at least partially comprises a needle felt consisting of at least partially thermoplastic fibers, at least a portion of said fibers being melt bonded to the adhesive coating (2).

US2015/299522 A1 (Coroplast Fritz Mueller GMBH) describes a self-windable, transversely tearable textile industrial adhesive tape (1) having a band-shaped substrate (2) and a thickness in the range of 0.05 mm to 1.8 mm: the substrate (2) consists of a knitted fabric (3) having stitches (5) made of yarn and is provided on one side with a pressure-sensitive adhesive coating, which coating is applied directly to the substrate (2) with a specific weight per unit area in the range of 20 $g/m^2$ to 300 $g/m^2$. In an embodiment, the substrate (2) includes weft threads running mutually parallel in the transverse direction, which weft threads are held in the stitches (5) of the knitted fabric (3).

US2011/168319 A1 (Baqai et al.) discloses a method of bonding integrated textile fragments such as patches, emblems, labels and cut textile parts to another textile article by laminating a pressure sensitive acrylic polymer adhesive to the back surface of the textile fragment. The acrylic polymer adhesive is devoid of any cross linking additives or reagents and is characterized by a storage modulus that is greaterthan its loss modulus within that frequency range of from 0.1885 Hz to 628 Hz where bonding and de-bonding are expected to occur. The pressure sensitive acrylic polymer adhesive is not water soluble and is of adequate thickness to provide a wash-durable textile-to-textile bond.

### STATEMENT OF THE INVENTION

In accordance with a first aspect of the invention, there is provided a tape comprising:

i) a first release liner; and,

ii) a pressure sensitive adhesive layer disposed on said first release liner, wherein said pressure sensitive adhesive layer is obtained by curing an adhesive composition comprising:

  a) an acrylic base copolymer obtained from a monomer mixture comprising at least one C1-C12 alkyl ester of (meth)acrylic acid and at least one acid monomer selected from acrylic acid, methacrylic acid, maleic acid, fumaric acid and itaconic acid;

b) a metal chelate cross-linking agent;
c) at least one tackifying resin;
d) an organic solvent; and, optionally
e) additives,

said tape optionally comprising iii) a second release liner which is disposed on that side of said pressure sensitive adhesive layer opposite to said first release liner. Desirably, the adhesive composition is solvent borne.

It is preferred that the tape be characterized by at least one of the following parameters: i) a width of from 5 to 20 mm; ii) a pressure sensitive adhesive layer having a dry film thickness of from 3 to 250 μm, preferably from 10 to 200 μm; and, iii) a pressure sensitive adhesive layer having a coating weight of from 3 to 250 $g/m^2$, preferably from 10 to 200 $g/m^2$. For completeness, the tape may be characterized by one, two or desirably three of these defined parameters i) to iii).

It is further preferred that the pressure sensitive adhesive layer of the tape comprises, based on the total weight of the adhesive layer: from 30 to 90 wt.%, preferably from 60 to 80 wt.% of said acrylic base copolymer; and, from 1 to 70 wt.%, preferably from 20 to 50 wt.% of said tackifying resin(s).

In a number of important embodiments, the adhesive composition comprises an acrylic base copolymer obtained from a monomer mixture comprising, by weight of the monomers: from 70 to 99 wt.% of a mixture of at least two C1-C12 alkyl esters of (meth)acrylic acid; and, from 1 to 30 wt.% of said at least one acid monomer. Good results have, for instance, been obtained where the adhesive composition comprises an acrylic base copolymer obtained from a monomer mixture consisting, by weight of the monomers, of: from 80 to 99 wt.%, preferably from 90 to 99 wt.%, of a mixture of 2-ethylhexyl acrylate and n-butyl acrylate; and, from 1 to 20 wt.%, preferably from 1 to 10 wt.%, of acrylic acid.

Preferably the metal chelate crosslinking agent of the adhesive composition consists of at least one complex of: a metal selected from the group consisting of Al, Ti, Fe, Co, Ba, Zr, K and Zn, from which group a preference for Al and Ti should be mentioned; and, a 1,3-dicarbonyl ligand-providing organic compound. Particularly effective metal chelate crosslinking agents are aluminium acetylacetonate and titanium acetylacetonate.

Further preferred embodiments of the tape of the present invention are characterized by comprising at least one tackifying resin wherein: i) each said resin has a softening point of from 50 to 130°C., preferably from 60 to 120°C. and more preferably from 70 to 110°C; and, ii) each said resin is a rosin ester resin selected from the group consisting of: gum rosin ester resins; hydrogenated gum rosin ester resins; wood rosin ester resins; hydrogenated wood rosin ester resins; tall oil rosin ester resins; and, hydrogenated tall oil rosin ester resins. These embodiments do not preclude the use of two such tackifying resins having quite distinct softening points and indeed good results have been obtained where the adhesive composition comprises a first such rosin ester resin having a softening point of from 70 to 90°C and a second such rosin ester resin having a softening point of from 90 to 110°C.

In accordance with a second aspect of the invention, there is provided a dispensing device comprising the tape as defined herein above and in the appended claims.

A further aspect of the present invention provides for the use of the tape - as defined herein above and in the appended claims - for repairing or joining materials, preferably textile materials.

## DEFINITIONS

As used herein, the singular forms "*a*", "*an*" and "*the*" include plural referents unless the context clearly dictates otherwise.

The terms *"comprising", "comprises"* and *"comprised of*" as used herein are synonymous with *"including", "includes", "containing"* or *"contains",* and are inclusive or open-ended and do not exclude additional, non-recited members, elements or method steps.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The terms *"preferred", "preferably", "desirably", "in particular", "particularly"* and synonyms thereof are used frequently herein to refer to embodiments of the disclosure that may afford particular benefits, under certain circumstances. However, the recitation of one or more preferable or preferred embodiments does not imply that other embodiments are not useful and is not intended to exclude those other embodiments from the scope of the disclosure.

The term *"curing"* is used herein in accordance with its ordinary meaning in the art and thus encompasses cross-linking. Without intention to limit the present invention, curing may be performed by *inter alia*: heating; exposure to ultraviolet light; electron beam; or, exposure to radiation. Prior to curing, the adhesive composition may comprise compounds that are, at 20°C, liquid, semi-solid or crystalline.

Where the stem *"(meth)acryl"* is used in the present description and the claims this is intended to be inclusive of *"acryl"* and *"methacryl"*.

As used herein, "*$C_1$-$C_{12}$ alkyl*" group refers to a monovalent group that contains 1 to 12 carbons atoms, that is a radical of an alkane and includes straight-chain and branched organic groups. Examples of alkyl groups include, but are not limited to: methyl; ethyl; propyl; isopropyl; n-butyl; isobutyl; sec-butyl; tert-butyl; n-pentyl; n-hexyl; isohexyl; heptyl; octyl; isooctyl; *sec*-octyl; *tert*-octyl; and, 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1-10 carbon atoms ($C_1$-$C_{10}$ alkyl) - for example unsubstituted alkyl groups containing from 1 to 8 carbon atoms ($C_1$-$C_8$ alkyl) - should be noted.

As used herein *"halide"* refers to fluoride, chloride, bromide or iodide. Analogously, a *"halogenated"* hydrocarbon group refers to hydrocarbon group compounds where at least one hydrogen has been replaced with a halogen.

The term *"release liner"* as used herein describes a (sandwich) laminate which includes at least one release layer applied on the surface of a mono- or multilayer carrier film, often referred to in the art as a base stock or carrier web. The release agent permits a transfer adhesive agent to be attached to the carrier film.

The term *"tape dispensing device"* is used herein simply to mean a device that dispenses tape. There is no specific intention to limit the meaning of this term, nor to limit the commonly known prior art devices which may find utility as tape dispensers for the adhesive tapes of the present invention. It is, however, submitted that suitable tape dispensers may additionally function to assist the user in cutting the tape into portions of a particular size and / or applying the tape to a surface or substrate. Further, it is preferred that the tape dispensing device has a spool arrangement supported by a base member and disposed for receiving a roll of tape. Illustrative but non-limiting examples of tape dispensing devices are disclosed in: US Patent No. 2,910,217; US Patent No. 3,489,324; US Patent No. 4,130,229; EP 2559643 B1; US2009/0179061; US2010/0018653; and, US Patent No. 9,254,611.

A given tape may be provided with transverse serrations at intervals along its length, which serrations facilitate the division of the tape into operable sections, for instance sections of from 10-20 cm in length. The term *"serrations"* as used herein encompasses notches, grooves, perforations, teeth and/or other surface indentations or formations which may be disposed within the release liner(s) and optionally the adhesive layer.

As used herein, molecular weights - stated, where applicable, as either number average molecular weight (Mn) or weight average molecular weight (Mw) - are measured by Size Exclusion Chromatography using a Waters 150 Gel Permeation Chromatograph equipped with a differential refractive index detector and calibrated using polystyrene standards. Samples are run in tetrahydrofuran at 45°C. Molecular weights are reported as polystyrene-equivalent molecular weights and in g/mol.

The glass transition temperature (Tg) of copolymers can be calculated from the monomeric composition of the copolymer. If the copolymer is homogeneous and prepared via a statistical co-polymerisation process, then the Tg can be calculated from the Tg values of all corresponding homopolymers, according to the Fox equation:

$$\frac{1}{Tg_m} = \frac{w_1}{Tg_1} + \frac{w_2}{Tg_2} + \frac{w_3}{Tg_3} + \ldots$$

wherein:

$Tg_m$: the Tg of the copolymer (in Kelvin);
$Tg_1$: the Tg of the homopolymer of comonomer 1 (in Kelvin);
$Tg_2$: the Tg of the homopolymer of comonomer 2; and
$w_1$: the weight fraction of comonomer 1 in the coploymer; etc.

The actual glass transition temperature (Tg) of the acrylic base copolymer and of any other resin herein can be determined by differential scanning calorimetry (DSC). The use of DSC to determine Tg is well known in the art, and is described by B. Cassel and M. P. DiVito in "Use of DSC To Obtain Accurate Thermodynamic and Kinetic Data", American Laboratory, January 1994, pp 14-19, and by B. Wunderlich in Thermal Analysis, Academic Press, Inc., 1990. As used herein, *"softening point"* (°C.) is the Ring & Ball softening point. Said ring-and-ball softening point is defined as the temperature at which a disk of the sample held within a horizontal ring is forced downward a distance of 1 inch (25.4 mm) under the weight of a steel ball as the sample is heated at a prescribed rate in a water or glycerol bath. The measurement method is set out in DIN 52011.

As used herein, the term *"dry film thickness"* refers to the thickness of a film after it is dried from a previously liquid state as is commonly understood in the art.

Any coating weight reported herein in grams/meter$^2$ (gsm) may be determined with an x-ray fluorescent machine such as Oxford 3000, Oxford Inc. England.

Any viscosities reported herein are measured at 20°C and 50% Relative Humidity (RH) using a Brookfield Viscometer equipped with a number 1 LV spindle operating at 60 revolutions per minute (rpm). The viscometer is calibrated using silicone oils of known viscosities.

The term *"solvent borne"* is used herein as a descriptor of a composition the viscosity of which is adjusted by the use of organic solvent (Art. 2, Directive 2004/42/CE of the European Parliament and of the Council). In particular herein, the water content of the solvent borne adhesive composition may be less than 1 wt. % and preferably less than 0.5 wt. %, based on the weight of the composition.

## DETAILED DESCRIPTION

As recited above, the pressure sensitive adhesive layer of the tape of the present invention is obtained by curing an adhesive composition comprising an acrylic base copolymer, a metal-chelate crosslinking agent, at least one tackifying resin and an organic solvent.

### Adhesive Coating Composition

The acrylic base copolymer of the present invention is obtained from a monomer mixture comprising: at least one and preferably at least two C1-C12 alkyl esters of (meth)acrylic acid; and, at least one acid monomer selected from acrylic acid, methacrylic acid, maleic acid, fumaric acid, and itaconic acid.

Commonly, the acrylic base copolymer is obtained from a monomer mixture comprising, by weight of the monomers: from 70 to 99 wt.% of a mixture of at least two C1-C12 alkyl esters of (meth)acrylic acid; and, from 1 to 30 wt.% of said at least one acid monomer. And more particularly, the copolymer is obtained from a monomer mixture comprising: from 80 to 99 wt.% of said at least two C1-C12 alkyl esters of (meth)acrylic acid; and, from 1 to 20 wt.% of said at least one acid monomer.

In such acrylic base copolymers, at least one and preferably at least two C1-C12 alkyl esters are C1-C10 or C1-C8 alkyl esters of (meth)acrylic acid. Desirably, the at least two C1-C12 alkyl esters of (meth)acrylic acid should be selected from the group consisting of: methyl acrylate; ethyl acrylate; butyl acrylate; 2-ethylhexyl acrylate; lauryl acrylate; isodecyl methacrylate; n-butyl methacrylate; isobutyl methacrylate; 2-hydroxy ethyl acrylate; and, 2-chloro ethyl acrylate.

In such acrylic base copolymers, it is preferable that said at least one acid monomer comprises acrylic acid and / or (meth)acrylic acid. And desirably, said at least one acid monomer is acrylic acid.

Thus, in an exemplary but non-limiting embodiment of the present invention, the copolymer is obtained from a monomer mixture consisting, by weight of the monomers, of:

a) from 80 to 99 wt.%, preferably from 90 to 99 wt.%, of 2-ethylhexyl acrylate and n-butyl acrylate; and,
b) from 1 to 20 wt.%, preferably from 1 to 10 wt.%, of acrylic acid.

For completeness, in most embodiments, it is noted that the acrylic base copolymers can include one or more polymerizable co-monomers, in particular polymerizable co-monomers selected from the group consisting of: acrylonitrile and C1-C12 alkyl substituted acrylonitriles; (meth)acrylamides; vinyl esters; vinyl ethers; vinyl amides; vinyl ketones; styrene, C1-C4 alkylsubstituted styrene and halogenated styrene; vinyl halides; olefins; and mixtures of two or more thereof.

The (meth)acrylamides include (meth)acrylamide and N-substituted alkyl and aryl derivatives thereof. These include N-methyl acrylamide, N,N-dimethyl acrylamide, t-octyl acrylamide and the like.

The vinyl ester co-monomers include, but are not limited to, vinyl acetate, vinyl propionate, vinyl butyrate, vinyl valerate, vinyl versatate and vinyl isobutyrate. The vinyl ethers include, but are not limited to, vinyl ethers having from 1 to 8 carbon atoms such as ethyl vinyl ether, butyl vinyl ether and 2-ethylhexylvinyl ether. The vinyl amides include, but are not limited to, vinyl amides having from 1 to 8 carbon atoms such as pyrrolidone. The vinyl ketones similarly include but are not limited to vinyl ketones having from 1 to 8 carbon atoms such as ethyl vinyl ketone and butyl vinyl ketone. And, the vinyl halide monomers include vinyl chloride, vinyl bromide, vinyl fluoride, vinylidene chloride, vinylidene bromide and vinylidene fluoride.

The aforementioned olefin co-monomers include, but are not limited to isoprene, butadiene and $C_2$ - $C_8$ straight chained and branched alpha-olefins such as ethylene, propylene, butylene, isobutylene, diisobutylene, 4-methyl pentene-1,1-butene, 1-hexene and 1-octene.

The composition of the acrylic base copolymer should be moderated such that the copolymer is characterized by a glass transition temperature (Tg) of less than 20°C and preferably of less than 0°C. Additionally or alternatively, the acrylic base copolymer should be characterized by a weight average molecular weight ($M_w$) of from 10,000 to

1,000,000, preferably from 20,000 to 500,000.

As is known in the art, the acrylic base copolymer may be prepared by any suitable free-radical initiated polymerization technique - such as emulsion, mini-emulsion, solution, suspension, micro-suspension or bulk polymerization - with a free-radical initiator and appropriate heating (e.g. at 30°C to 90°C) being employed.

Suitable free radical initiators, which are conventionally used in an amount between 0.05 and 6 wt.% based on the total weight of monomers used, include: hydrogen peroxide; alkyl hydroperoxides, such as t-butylhydroperoxide and cumene hydroperoxide; persulphates, such as $NH_4$-persulphate, K-persulphate and Na-persulphate; organic peroxides, such as acyl peroxides and including benzoyl peroxide; dialkyl peroxides, such as di-t-butyl peroxide; and, peroxy esters, such as t-butyl perbenzoate.

The peroxy compounds are in some cases advantageously used in combination with suitable redox systems such as Na or K pyrosulphite or bisulphite, and isoascorbic acid. Metal compounds such as Fe.EDTA may also be usefully employed as part of the redox initiator system. Furthermore, azo-functional initiators, such as azo-bis(isobutyronitrile), 2,2'-azobis(2-methyl butyronitrile) (AMBN) and 4,4'-azobis(4-cyanovaleric acid) may also be used.

In a preferred embodiment, the acrylic base copolymer is prepared in a solution comprising ethyl acetate and, optionally, co-solvents such as isopropyl alcohol: the solids content during such a solution polymerization may typically range from about 30% to about 80% in order to achieve the desired weight average molecular weight of the copolymer and yet maintain a workable viscosity in the reaction vessel.

Irrespective of how the copolymer is provided, the acrylic base copolymer should be included in the adhesive composition in an amount such that the resultant pressure sensitive adhesive layer comprises, based on the weight of the adhesive layer, from 30 to 90 wt.%, preferably from 60 to 80 wt.% of said copolymer.

The adhesive composition of the present invention further comprises a metal chelate cross-linking agent. Said metal chelate should be stable at temperatures up to 40°C.

In a number of embodiments, the metal chelate crosslinking agent consists of at least one complex of:

i) a metal selected from the group consisting of Al, Ti, Fe, Co, Ba, Zr, K and Zn, with a preference for Al and Ti being acknowledged; and,

ii) a 1,3-dicarbonyl ligand-providing organic compound.

As used herein, a 1,3-dicarbonyl-ligand providing organic compound is a compound able to take part in chelation with a metal and which has at least two carbonyl groups arranged in a 1,3 spatial arrangement with reference to the carbon atoms to which they are bonded: this arrangement may be represented schematically as:

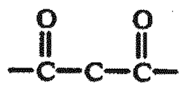

And exemplary metal chelates of this type include, but are not limited to: metal beta β-keto esters, such as metal acetoacetate esters and including metal ethyl acetoacetates (ligand: ethyl acetoacetate); metal malonate esters, such as metal diethyl malonates; metal acetylacetonates (ligand: acetylacetone); metal formylacetonates (ligand: formylacetone); and, metal formylacetophenonates (ligand: formylacetophenone).

In a particularly preferred embodiment, the metal chelate crosslinking agent is aluminium or titanium acetylacetonate.

The metal chelate cross-linking agent may be contained in the adhesive composition in an amount of from 0.01 to 5 wt.%, preferably from 0.05 to 2 wt.% and more preferably from 0.05 to 1 wt.%, based on the weight of the composition. Where the content of the cross-linking agent is less than 0.01 wt.%, the cohesion of the adhesive may be detrimentally lowered. Conversely, where the content of the cross-linking agent is greater than 5 wt.%, the storage stability of the coated product can be diminished on account of *inter alia* interlayer peeling or loosing.

The adhesive coating composition comprises at least one tackifying resin, which is desirably included in that composition in a sufficient amount such that the adhesive layer derived therefrom comprises, based on the weight of the adhesive layer, from 1 to 70 wt.%, preferably from 20 to 50 wt.% of said tackifying resin(s).

Exemplary tackifying resins include: aliphatic hydrocarbon resins; hydrogenated aliphatic hydrocarbon resins; aromatic modified aliphatic hydrocarbon resins; hydrogenated aromatic modified aliphatic hydrocarbon resins; polycyclopentadiene resins; hydrogenated polycyclopentadiene resins; cycloaliphatic hydrocarbon resins; hydrogenated cycloaliphatic resins; cycloaliphatic/aromatic hydrocarbon resins; hydrogenated cycloaliphatic/aromatic hydrocarbon resins; hydrogenated aromatic hydrocarbon resins; maleic acid / anhydride modified tackifier; terpene modified aromatic and / or aliphatic hydrocarbon resin; hydrogenated terpene modified aromatic and / or aliphatic hydrocarbon resin; polyterpene resins; hydrogenated polyterpene resins; aromatic modified polyterpene resins; hydrogenated aromatic modified polyterpene resins; terpene-phenol resins; hydrogenated terpene-phenol resins; gum rosin resins; hydrogenated gum rosin resin; gum rosin ester resins; hydrogenated gum rosin ester resins; wood rosin resin; hydrogenated wood rosin resins; wood rosin ester resins; hydrogenated wood rosin ester resins; tall oil rosin resins; hydrogenated tall oil rosin resins; tall oil rosin ester resins; hydrogenated tall oil rosin ester resins; rosin acid resins; hydrogenated rosin acid resins; and, mixtures of two or more thereof.

Without intention to limit the present invention, examples of commercially available tackifiers which may find utility herein include: ESCOREZ® 1000, 2000 and 5000 series hydrocarbon resins; ECR-373, Oppera™ PR 100, 101, 102, 103, 104, 105, 106, 111, 112, 115 and 120, available from ExxonMobil Chemical Company; ARKON™ M series, Arkon P series and SUPER ESTER™ rosin esters available from Arakawa Chemical Company; SYLVARES™ phenol modified styrene-a methyl styrene resins and styrenated terpene resins available from Kraton Corporation; ZONATAC terpene-aromatic resins and terpene phenolic resins available from Kraton Corporation; SYLVATAC™ and SYLVALITE™ rosin esters available from Kraton Corporation; NORSOLENE™ aliphatic aromatic resins available from Cray Valley; DERTOPHENE™ terpene phenolic resins available from DRT Chemical Company; EASTOTAC™ resins, PICCOTAC™ $C_5/C_9$ resins, REGALREZ™ aromatic and REGALITE™ cycloaliphatic/aromatic resins available from Eastman Chemical Company; WINGTACK™ resins available from Goodyear Chemical Company; FORAL™, PENTALYN™, AND PERMALYN™ rosins and rosin esters available from Eastman Chemical Company; QUINTONE™ acid modified $C_5$ resins, $C_5/C_9$ resins, and acid modified $C_5/C_9$ resins available from Nippon Zeon; LX™ mixed aromatic/cycloaliphatic resins available from Neville Chemical Company; and, CLEARON hydrogenated terpene aromatic resins available from Yasuhara Chemical.

It is preferred herein for the tackifier to be constituted by one or more resins, each said resin having a weight-average molecular weight (Mw) below 10,000, preferably below 2,500 and more preferably below 2000.

In a different expression of preference, which is not intended to be mutually exclusive of the above molecular weight conditions, it is preferred herein for said tackifier to be constituted by one or more resins, wherein: i) each said resin has a softening point of from 50° to 130°C., preferably from 60° to 120°C. and more preferably from 70° to 110°C; and, ii) each said resin is selected from the group consisting of: gum rosin ester resins; hydrogenated gum rosin ester resins; wood rosin ester resins; hydrogenated wood rosin ester resins; tall oil rosin ester resins; and, hydrogenated tall oil rosin ester resins. For example, the tackifier may advantageously comprise a first such rosin ester resin having a softening point of from 70° to 90°C and a second such rosin ester resin having a softening point of from 90° to 110°C.

A preference for the use of glycerol and pentaerythritol esters of gum rosins, wood rosins and tall-oil rosins might further be noted, of which esters commercial examples include: Foral 105 available from Eastman Chemical Company; Sylvalite RE100S, Sylvatac™ RE85 and Sylvatac™ RE95 available from Kraton Corporation.

The adhesive composition of the present invention comprises a solvent in which the acrylic base copolymer is dissolved. If required to achieve dissolution, the adhesive composition can be prepared at elevated temperatures, for example from 25° to 40°C. In any event, suitable solvents for use in the present invention may be selected from: ethers; esters; ketones; alcohols; halogenated hydrocarbons; alkanes; alkenes; amides; and, aromatic hydrocarbons.

Exemplary solvents are diethyl ether, methyl-t-butyl ether, tetrahydrofuran, 1,4-dioxane, glyme ethers, ethyl acetate, isopropyl acetate, butyl acetate, amyl acetate, isobutyl acetate, ethylene glycol monobutyl ether acetate, ethylene glycol monoethyl acetate, ethylene glycol monomethyl ether acetate, 2-ethylhexyl acetate, glycol diacetate, methoxybutyl acetate, acetone, methyl ethyl ketone, diethyl ketone, methyl isobutyl ketone, di-isobutyl ketone, cyclohexanone, n-butanol, isopropanol, ethanol, dichloromethane, trichloroethylene, tetrachloroethylene, heptane, hexane, isooctane, cyclohexane, dimethylformamide, toluene, xylene, dichlorobenzene, or mixtures of two or more of the recited solvents.

In a first important embodiment, the solvent of the adhesive composition comprises by weight of the solvent at least 50 wt.% of ethyl acetate. In a second, but not mutually exclusive embodiment, the adhesive composition is characterized as being solvent borne.

The lowest level of solvent present in the adhesive composition should usually correspond to the minimum amount of solvent required to dissolve the acrylic base copolymer at the application temperature of the composition. The tolerated viscosities for a given method by which the adhesive composition can be applied and the requirement to provide an operable drying time of the adhesive composition after application will be determinative of the upper limit of the amount of solvent present in the composition. Such an upper limit can of course be established by the skilled practitioner, using where applicable trial and error. However, it is submitted that the amount of solvent and thereby the quantitative ratio of the essential and optional components of the adhesive composition should generally be established such that the resultant composition has at least one of: a solids content of from 20 to 80% by weight, preferably from 35 to 60% by weight; and, a viscosity of from 100 to 5000 mPa·s, preferably from 100 to 2500 mPa.s, as measured at a temperature of 20°C and determined immediately after preparation of the adhesive composition, for example, up to two minutes after mixing thereof.

The adhesive coating composition can also contain certain additives which are not detrimental to the curing characteristics and storage stability of the composition, to the cured film derived therefrom and to the utility of that cured film. Mention in this regard may be made of: moisture scavengers; pigments; fillers; antistatic agents; plasticizers; compounding agents; diluents; light stabilizers; and, antioxidants. It is preferred that *in toto* the adhesive coating composition comprises, based on the weight of the adhesive coating composition, less than 15 wt.% of additives.

Examples of moisture scavengers useful in the present invention are: ortho esters, such as trimethyl orthoacetate and triethyl orthoformate; oxazolidine compounds, such as 3-ethyl-2-methyl-2-(3- methylbutyl)-1 ,3-oxazolidine; silanes, such as vinyl trimethoxysilane; and, low molecular weight siloxanes that do not contain hydrogen abstractable moieties, for instance certain alkoxy poly(alkoxysilanes) wherein the alkoxy group has from 1 to 10 or from 1 to 6 carbon atoms. Other moisture scavengers, sometimes referred to as viscosity stabilizers, will be familiar to a person of ordinary skill in the art.

Pigments, if desired, are provided in an amount sufficient to impart the desired color to the adhesive. Without intention to limit the present invention, exemplary pigments include solid inorganic fillers, such as carbon black and, titanium dioxide. Useful inorganic fillers, in addition to the aforementioned pigmentary fillers, include: aluminum trihydrate; christobalite; glass fibers; quartz; kaolin; wollastonite; mica; silicates, such a feldspar; precipitated or fumed silica; copper; magnesium hydroxide; talc; and, nickel and calcium carbonate. Metal oxides, such as aluminum trihydrate and magnesium hydroxide are particularly useful as they may act as flame retardants and can also improve cohesive strength, particularly at elevated temperatures.

To form the adhesive compositions of the present invention, the above described components of the adhesive composition are mixed using means and conditions to ensure the resultant compositions are homogeneous. In some circumstances, mixing may occur at an elevated temperature but the applied heat should neither result in significant solvent evaporation nor initiate the crosslinking reaction. For reference where required, instructive guidelines on how to formulate adhesives may be found *inter alia* in: D.R. Gehman, "Acrylic Adhesives" in Handbook of Adhesives, 3rd Ed., I. Skeist (Ed.), Van Nostrand Reinhold, New York, 1990, Chapter 25.

Adhesive Tapes

The adhesive compositions are cast onto a first release liner and the solvent evaporated therefrom. Suitable methods for such casting include, but are not limited to, kiss coating with a round bar or a Meyer bar, gravure coating, knife coating, air knife coating, comma coating, reverse coating, comma reverse coating, lip coating, Ultra Die coating or gear die coating. Simultaneously with or subsequent to the drying of the adhesive compositions, the temperature of the adhesive compositions may be further elevated -to from 80 to 250°C for a period of from 0.03 to 2 hours, for instance - to cure the adhesive by promoting the crosslinking reaction. Then, if desired, a second release liner may be disposed on the crosslinked adhesive layer on the side opposite the first release liner.

The adhesive compositions are typically applied so that the resultant adhesive layer has a dry film thickness of from 3 to 250 μm, preferably from 10 to 200 μm. If the thickness of the adhesive layer is less than 3 μm, the adhesive force to the eventual adherend will usually be insufficient and the applied tape may lift up therefrom. Conversely, when the thickness of the adhesive layer exceeds 250 μm, this may lead to be impaired operability or breakage when separating and applying the tape.

In an alternative, but not mutually exclusive expression of the coating operation, the adhesive compositions may be applied so that the resultant adhesive layer has a coating weight of from 20 to 250 g/m$^2$, preferably from 50 to 200 g/m$^2$.

As defined above, release liners are composed of a mono- or multilayer carrier film which is equipped on one or both sides with a release layer. There is no particular intention to limit the form of the release liners which find utility in the present invention and therefore general discussions on release liners provided in *inter alia* the following references may be considered instructive: Satas et al. in Handbook of Pressure Sensitive Adhesives Technology, D. Satas (ed.), 3rd Edition, 1999, Satas & Associates, Warwick, pp. 632-651; Kinning et al. Adhesion Science and Engineering-Volume 2: Surfaces, Chemistry & Applications, M. Chaudhury, A. V. Pocius (Ed.), 2002, Elsevier, Amsterdam, pp. 535-571; and, Jones et al. in Handbook of Pressure Sensitive Adhesives Technology. D. Satas (ed.), 3rd Edition, 1999, Satas & Associates, Warwick, pp. 652-683.

The above acknowledged, it is herein preferred however that the carrier film of the release liner comprises: polyolefin, such as homopolymers and copolymers of ethylene, propylene, butylene and / or hexylene and including, in particular, biaxial oriented polypropylene (BOPP); polyester, such as polyethylene terephthalate (PET), polybutylene terephthalate, trimethylene terephthalate and polyethylene naphthalate (PEN); polymethylmethacylate (PMMA); polyether ether ketone (PEEK); polycarbonate (PC); polysulfone; polyimide (PI); polyacrylonitrile (PAN); styrene acrylonitrile (SAN); polyurethane (PU); polyamide; ethylene-styrene copolymers (ES); cyclo-olefins; polyvinyl alcohol (PVA); ethylene-vinyl acetate (EVA); styrene acrylonitrile copolymer (SAN); ionomer; synthetic paper, such as polypropylene synthetic paper or polyethylene synthetic paper; blends of the aforementioned polymers; blends of the aforementioned polymers with inorganic powder; or, a composite of the aforementioned polymers and synthetic paper.

A preference for carrier films comprising or consisting of polyolefins, polymethylmethacryate (PMMA) and / or polyesters is acknowledged. The preference for polyolefins derives in part from the fact that through the polymerization process by which the polyolefins are derived and through the selection of the monomers for said process, it is possible

to control the physical and mechanical properties of the polyolefin film, including in particular the softening temperature and / or tensile strength thereof. Of said polyesters, a particular preference for polyethylene terephthalate (PET) may further be noted. And commercial examples of such PET films include: Hostophan™ films, available from Mitsubishi; Lumirror™ films, available from Toray; and, Melinex™ films, available from DuPont Teijin.

For reasons of handling and of storage without shrinkage or curling of the release liners, the carrier films thereof should desirably be characterized by one or more of: a thickness from 8 to 150 μm, for example from 10 to 100 μm; a bending strength of from 0.5 to 3 N/25 mm; and, a yield point load of from 50 to 200 N/10 mm.

The bending strength stated herein is measured at 35°C by bending lengthwise a test sample of the carrier film having a width of 25 mm and a length of 100 mm into a U-shape by bringing both ends thereof closer to each other at a rate of 300 mm/min. Yield Point stated herein is determined using ASTM D-638 for a test sample of the carrier film having a width of 10 mm.

Depending on the desired degree of release force, the release layer comprises or consists of a release agent selected from group consisting of: (i) silicone release agents; (ii) organo-modified silicones; and, iii) non-silicone release agents, such as fluoro-chemical release agents, fatty acid amide-based release agents and linear, low density polyethylene (LLDPE). Herein, the use of silicone release agents is preferred and, in particular, the use of polyorganosiloxanes, including polydimethylsiloxanes and epoxypolysiloxanes. Useful silicone release agents may be found *inter alia* in: US Patent No. 3,288,482; US Patent No. 3,527,659; US Patent No. 4,563,539; US Patent No. 4,576,999; US Patent No. 4,547,431; US Patent No. 4,279,717; and, US Patent No. 5,576,356.

The or each release layer can be applied to the carrier film using known and established methods including but not limited to: dipping; gravure coating; roll coating; blade coating; air knife coating; bar coating; or, spray coating. The optimal method for this application will be dependent upon the type of release agent and whether the coating is applied as a dispersion or as a solution in an aqueous or organic solvent. After application, the composition is allowed to dry.

Irrespective of whether the release liners are provided with release layers on one side or both sides of the carrier film, it is preferred that the release liners have a thickness of from 8 μm to 150 μm, for example from 10 μm to 100 μm. Where applicable, the thickness of release liners disposed on opposite sides of the carrier film may be the same or different.

An adhesive tape in accordance with the present invention may be described with reference to the following drawings in which:

Figure 1 illustrates an exemplary spool of the adhesive tape; and
Figure 2 provides a cross-sectional view through said exemplary spool of Figure 1.

In that Figure 1, the adhesive tape (1) is shown with an upper release liner (2). The tape is provided as a spool disposed upon a cylinder (3) from which it can be unwound by the application of force. The tape is further provided herein with transverse serrations (4) which provide for facile removal of a section of the tape. The tape (1) has a width (L) which will typically be from 5 to 20 mm.

In Figure 2 - the section of the tape (1) taken along the transverse line (5-5") - there is depicted first (2a) and second (2b) release liners which sandwich there-between a pressure sensitive adhesive layer (6).

<u>Applications of the Adhesive Tape</u>

In use, a portion of the adhesive layer of the tape is exposed by removal of the or each release liner therefrom. That adhesive layer is then disposed on a portion of a first textile substrate and subsequently either a further portion of the first textile substrate or a second textile substrate is disposed thereon. In clothing and other textile repair applications, the first alternative of this disposal step may be exemplified by the folding back upon itself a frayed or untidy hem or the sealing of previously joined portions of a sleeve, pocket or the like; the second alternative of this disposal step may be exemplified by the adhesion of a patch to an area of textile that might have become worn or might have holes therein. It will of course be apparent that patches used to repair, embroider or embellish a textile substrate may be provided in any regularor irregular 2-dimensional shape, including squares, rectangles, strips, circles, ovals, and the like.

The so-conjoined portions of textile substrate may be subjected to pressure and optionally heat, typically for a period of less than 5 minutes. Of course, heat and pressure may be applied simultaneously by running a standard household iron over the relevant area or emplacing the conjoined area in a (clothing) press.

It is envisaged that any natural, semi-synthetic or synthetic organic textile substrate material can be adhered in accordance with this invention. Suitable common natural and semi-synthetic organic textile materials include cotton, linen, ramie, hemp, jute, wood pulp, paper, leather, furs, feathers, cellulose ethers, cellulose esters (e.g., cellulose acetate and cellulose), regenerated cellulose rayons (e.g. viscose, cuprammonium, etc.), natural silks, tussore silk and wool. Suitable synthetic organic textile materials include but are not limited to those prepared from monofilaments and

continuous yarns from: polyamide fibers, such a nylon and aramid fibers; acrylic, vinyl- and vinylidene-type fibers, such as Orlon, Acrilan, Creslan, Dynel, Darlon, Verel, Zefran, Velon, Vinyon and Teflon; and, polyester fibers, such as Dacron and Terylene. It is not precluded that the present invention may be used to adhere textiles prepared from mixed or blended yarns produced by spinning combinations of selected natural, semi-synthetic and synthetic fibers from among the above-enumerated textile and fibrous materials.

## Illustrative Embodiment of the Present Invention

In an interesting and effective but illustrative and non-limiting embodiment of the present invention, there is provided a tape comprising:

i) a first release liner; and,
ii) a pressure sensitive adhesive layer disposed on said first release liner, wherein said pressure sensitive adhesive layer is obtained by curing a solvent-borne adhesive composition comprising:

a) an acrylic base copolymer obtained from a monomer mixture comprising, by weight of the monomers, from 80 to 99 wt.%, preferably from 90 to 99 wt.%, of a mixture of at least two C1-C10 alkyl esters of acrylic acid and from 1 to 20 wt.%, preferably from 1 to 10 wt.%, of acrylic acid.
b) a metal chelate cross-linking agent comprising or consisting of aluminium acetylacetonate or titanium acetylacetonate;
c) a first tackifying resin having a softening point of from 70 to 90°C and a second tackifying resin having a softening point of from 90 to 110°C, each of said first and second tackifying resins being a rosin ester resin selected from the group consisting of: gum rosin ester resins; hydrogenated gum rosin ester resins; wood rosin ester resins; hydrogenated wood rosin ester resins; tall oil rosin ester resins; and, hydrogenated tall oil rosin ester resins;
d) an organic solvent comprising, by weight of the solvent, at least 50 wt.% of ethyl acetate; and, optionally
e) additives,

wherein said tape optionally comprises iii) a second release liner which is disposed on that side of said pressure sensitive adhesive layer opposite to said first release liner; and,
wherein said tape is characterized in that the pressure sensitive adhesive layer comprises, based on the total weight of the adhesive layer, from 30 to 90 wt.%, preferably from 60 to 80 wt.% of said acrylic base copolymer and from 1 to 70 wt.%, preferably from 20 to 50 wt.% of said tackifying resins.

The following examples are also illustrative of the present invention, and are not intended to limit the scope of the invention in any way.

## EXAMPLES

The following materials are employed in the Examples:

| | |
|---|---|
| BA: | n-Butyl acrylate. |
| GAA: | Glacial Acrylic acid. |
| 2-EHA: | 2-Ethylhexyl acrylate. |
| Tackifier 1: | Tall oil rosin ester resin having a softening point of 97-105°C. |
| Tackifier 2: | Tall oil rosin ester resin having a softening point of 83°C. |
| AIAA: | Aluminium acetylacetonate. |

### Synthesis Example 1

Copolymer A was synthesized using free radical polymerization based on the following monomer mixture defined in wt.%, by weight of the monomers: 32 wt.% 2-EHA; 65 wt.% BA; 3 wt.% GAA. The obtained copolymer was characterized by a residual monomer content of less than 0.1 wt.%.

Under mixing at 20°C, an adhesive composition was prepared based on the ingredients defined in Table 1 herein below.

Table 1

| Ingredient | Wt. % |
|---|---|
| Copolymer A | 36.2 |
| Ethyl acetate | 25.4 |
| Hexane | 1.8 |
| Isopropanol | 1.0 |
| 2,4 Pentadione | 0.6 |
| AIAA | 0.2 |
| Toluene | 17.1 |
| Tackifier 1 | 11.8 |
| Tackifier 2 | 5.9 |
| **Total** | **100.0** |

Example 1: Determination of Soaking and Hardening Properties

In this Example, the tape according to the present invention was formed with the use of a Elcometer applicator with the gap set using the formula: gap = (coat weight x 100) / (solid content in % x 0.55). The coated film was put in an oven at 110°C for 3 minutes for drying. For the soaking and hardening tests, two pieces of the fabrics indicated in Table 2 were bonded together using the formed tape or the disclosed comparative products, and were observed after 24 hours. The descriptors used in Table 2 are explained as follows:

a) Soaking:

- "None" means no product can be observed coming through the fabrics;
- "Medium" means product can be observed coming through the fabrics in some part of the bondline; and,
- "High" means product can be observed coming through the fabrics across all the bondline.

b) Hardening:

- "None" means the fabrics are as flexible as they would be when not bonded;
- "Medium" means the fabrics are a little stiff; and,
- "High" means the fabrics are very stiff to touch.

To attain the Speed result of Table 2, 25 x 80 mm strips of cotton fabric were bonded with a 12.7mm (0.5 inch) overlap. The time quoted (in seconds) is the time needed for the assembly to hold a 3kg weight.

Table 2

| Fabric | Property | Acrylic Tape of Invention (100gsm) | Konishi Bond Sufri | Wundaweb | Gutterman HT-2 |
|---|---|---|---|---|---|
| Cotton | Soaking | None | None | None | None |
| | Hardening | None | Medium | None | None |
| | Speed (secs) | Instant | 120 | 20 (upon ironing) | 480 |
| Polyester | Soaking | None | High | None | Medium |
| | Hardening | None | High | None | None |

Example 2: Measurement of Peel Strength

The tape obtained by the above-described method was slit into a size of 25 mm in width and 100 mm in length and, after removal of the release liner, was affixed to a fabric strip 30 mm in width and 120 mm in length disposed on a

planar surface. A second fabric strip of identical material and dimensions was disposed over the affixed adhesive. In all cases a rubber roller of 2 kg was moved back and forth four times on the assembly obtained. Where indicated below (*), the assembly was pressed using a pre-heated iron for 30 seconds.

To provide comparative assemblies, the above steps were repeated using Konishi Bond Sufri in place of the affixed pressure sensitive adhesive layer.

Subsequently, for each assembly, the peel force when separated to the 180° direction was measured using an Instron 3367 at a tensile speed of 200 mm/min at 25°C. The measurement was performed three times for each assembly: the averaged values of peel forces were determined and are shown in Table 3 herein below.

Table 3

| Fabric | Acrylic Tape of Invention (100gsm) | Konishi Bond Sufri |
|---|---|---|
| Cotton | 1.07 ± 0.11* | 0.67 ± 0.07 |
| Polyester | 1.04 ± 0.11 | 0.50 ± 0.05 |

Example 3: Determination of Washability

The washability of specimens was determined using the following procedure. Six rectangular pieces of polyester fabric of 2 x 6 cm were cut: each of the adhesive (tapes or webs) detailed in Table 4 below were applied to two such pieces. For each piece, the hem of the fabric was the folded over onto the tape to create six assemblies. A first assembly for each adhesive type was further processed without additional treatment. A second assembly for each adhesive type was subjected to pressing with a pre-heated iron for 30 seconds before further processing.

The assemblies were then introduced into a Zanussi ZKG7125 and washed at 40°C using Bold™ 2-in-1 washing powder. The number of washing cycles - each of circa 40 minutes duration - performed without the hem de-bonding was recorded. The results are provided in Table 4 herein below.

Table 4

| Polyester Fabric Assemblies | Number of Washing Cycles | | |
|---|---|---|---|
| | Acrylic Tape of Invention (100gsm) | Konishi Bond Sufri | Wondaweb |
| Non-ironed | > 100 | 5 | N/A |
| Ironed for 30 seconds | > 100 | 25 | 7 |

**Claims**

**1.** A tape comprising:

i) a first release liner; and,
ii) a pressure sensitive adhesive layer disposed on said first release liner, wherein said pressure sensitive adhesive layer is obtained by curing an adhesive composition comprising:

a) an acrylic base copolymer obtained from a monomer mixture comprising at least one C1-C12 alkyl ester of (meth)acrylic acid and at least one acid monomer selected from acrylic acid, methacrylic acid, maleic acid, fumaric acid and itaconic acid;
b) a metal chelate cross-linking agent;
c) at least one tackifying resin;
d) an organic solvent; and, optionally
e) additives,

said tape optionally comprising iii) a second release liner which is disposed on that side of said pressure sensitive adhesive layer opposite to said first release liner.

**2.** The tape according to claim 1 having a width of from 5 to 20 mm.

**3.** The tape according to claim 1 or claim 2, wherein the or each release liner comprises a carrier film which is provided

on one or both sides with a release layer, preferably wherein the carrier film comprises or consists of polyethylene terephthalate and said release layer comprises or consists of an silicone release agent.

4. The tape according to any one of claims 1 to 3, wherein the pressure sensitive adhesive layer is **characterized by**:

   a dry film thickness of from 3 to 250 μm, preferably from 10 to 200 μm; and / or,
   a coating weight of from 3 to 250 $g/m^2$, preferably from 10 to 200 $g/m^2$.

5. The tape according to any one of claims 1 to 4, wherein the pressure sensitive adhesive layer comprises, based on the total weight of the adhesive layer:

   from 30 to 90 wt.%, preferably from 60 to 80 wt.% of said acrylic base copolymer; and,
   from 1 to 70 wt.%, preferably from 20 to 50 wt.% of said tackifying resin(s).

6. The tape according to any one of claims 1 to 5, wherein the adhesive composition is solvent borne.

7. The tape according to any one of claims 1 to 6, wherein the adhesive composition comprises an acrylic base copolymer obtained from a monomer mixture comprising, by weight of the monomers: from 70 to 99 wt.% of a mixture of at least two C1-C12 alkyl esters of (meth)acrylic acid; and, from 1 to 30 wt.% of said at least one acid monomer.

8. The tape according to claim 7, wherein the adhesive composition comprises an acrylic base copolymer obtained from a monomer mixture consisting, by weight of the monomers, of:

   a) from 80 to 99 wt.%, preferably from 90 to 99 wt.%, of a mixture of 2-ethylhexyl acrylate and n-butyl acrylate; and,
   b) from 1 to 20 wt.%, preferably from 1 to 10 wt.%, of acrylic acid.

9. The tape according to any one of claims 1 to 8, wherein said metal chelate crosslinking agent consists of at least one complex of:

   a metal selected from the group consisting of Al, Ti, Fe, Co, Ba, Zr, K and Zn; and,
   a 1,3-dicarbonyl ligand-providing organic compound.

10. The tape according to claim 9, wherein said metal chelate crosslinking agent is aluminium or titanium acetylacetonate.

11. The tape according to any one of claims 1 to 10, wherein the adhesive composition comprises at least one tackifying resin, wherein: i) each said resin has a softening point of from 50 to 130°C., preferably from 60 to 120°C. and more preferably from 70 to 110°C; and, ii) each said resin is a rosin ester resin selected from the group consisting of: gum rosin ester resins; hydrogenated gum rosin ester resins; wood rosin ester resins; hydrogenated wood rosin ester resins; tall oil rosin ester resins; and, hydrogenated tall oil rosin ester resins.

12. The tape according to claim 11, wherein the adhesive composition comprises a first rosin ester resin having a softening point of from 70 to 90°C and a second rosin ester resin having a softening point of from 90 to 110°C.

13. The tape according to any one of claims 1 to 12, wherein the organic solvent of the adhesive composition comprises, by weight of the solvent, at least 50 wt.% of ethyl acetate.

14. A dispensing device comprising the tape as defined in any one claims 1 to 13.

15. Use of the tape as defined in any one of claims 1 to 13 for repairing or joining materials, preferably textile materials.

**Patentansprüche**

1. Band, umfassend:

   i) einen ersten Release-Liner; und
   ii) eine druckempfindliche Klebstoffschicht, die auf dem ersten Release-Liner angeordnet ist, wobei die druckempfindliche Klebstoffschicht durch Aushärten einer Klebstoffzusammensetzung erhalten wird, umfassend:

a) ein Copolymer auf Acrylbasis, das aus einer Monomermischung erhalten wird, die mindestens einen C1-C12-Alkylester von (Meth)acrylsäure und mindestens ein Säuremonomer umfasst, das aus Acrylsäure, Methacrylsäure, Maleinsäure, Fumarsäure und Itaconsäure ausgewählt ist;
b) ein Metallchelatvernetzungsmittel;
c) mindestens ein Klebrigharz;
d) ein organisches Lösungsmittel; und optional
e) Zusätze,

wobei das Band optional iii) einen zweiten Release-Liner umfasst, der auf der Seite der druckempfindlichen Klebstoffschicht gegenüber dem ersten Release-Liner angeordnet ist.

**2.** Band nach Anspruch 1, das eine Breite von 5 bis 20 mm aufweist.

**3.** Band nach Anspruch 1 oder 2, wobei der oder jeder Release-Liner eine Trägerfolie umfasst, die auf einer oder beiden Seiten mit einer Trennschicht bereitgestellt ist, bevorzugt wobei die Trägerfolie Polyethylenterephthalat umfasst oder aus diesem besteht und die Trennschicht ein Silikontrennmittel umfasst oder aus diesem besteht.

**4.** Band nach einem der Ansprüche 1 bis 3, wobei die druckempfindliche Klebstoffschicht **gekennzeichnet ist durch**: eine Trockenfilmdicke von 3 bis 250 $\mu$m, bevorzugt von 10 bis 200 $\mu$m; und/oder ein Beschichtungsgewicht von 3 bis 250 g/$m^2$, bevorzugt von 10 bis 200 g/$m^2$.

**5.** Band nach einem der Ansprüche 1 bis 4, wobei die druckempfindliche Klebstoffschicht basierend auf dem Gesamtgewicht der Klebstoffschicht umfasst:

von 30 bis 90 Gew.-%, bevorzugt von 60 bis 80 Gew.-%, des Copolymers auf Acrylbasis; und
von 1 bis 70 Gew.-%, bevorzugt von 20 bis 50 Gew.-%, des/der Klebrigharze(s).

**6.** Band nach einem der Ansprüche 1 bis 5, wobei die Klebstoffzusammensetzung lösemittelhaltig ist.

**7.** Band nach einem der Ansprüche 1 bis 6, wobei die Klebstoffzusammensetzung ein Copolymer auf Acrylbasis umfasst, das aus einer Monomermischung erhalten wird, umfassend, bezogen auf das Gewicht der Monomere: von 70 bis 99 Gew.-% einer Mischung aus mindestens zwei C1-C12-Alkylestern von (Meth)acrylsäure; und von 1 bis 30 Gew.-% des mindestens einen Säuremonomers.

**8.** Band nach Anspruch 7, wobei die Klebstoffzusammensetzung ein Copolymer auf Acrylbasis umfasst, das aus einer Monomermischung erhalten wird, die, bezogen auf das Gewicht der Monomere, besteht aus:

a) von 80 bis 99 Gew.-%, bevorzugt von 90 bis 99 Gew.-%, einer Mischung von 2-Ethylhexylacrylat und n-Butylacrylat; und
b) von 1 bis 20 Gew.-%, bevorzugt von 1 bis 10 Gew.-%, von Acrylsäure.

**9.** Band nach einem der Ansprüche 1 bis 8, wobei das Metallchelatvernetzungsmittel aus wenigstens einem Komplex besteht von:

einem Metall, das aus der Gruppe ausgewählt ist, die aus Al, Ti, Fe, Co, Ba, Zr, K und Zn besteht; und
einer organischen Verbindung, die 1,3-Dicarbonylliganden bereitstellt.

**10.** Band nach Anspruch 9, wobei das Metallchelatvernetzungsmittel Aluminium oder Titanacetylacetonat ist.

**11.** Band nach einem der Ansprüche 1 bis 10, wobei die Klebstoffzusammensetzung mindestens ein Klebrigharz umfasst, wobei: i) jedes Harz einen Erweichungspunkt von 50 bis 130 °C, bevorzugt von 60 bis 120 °C und stärker bevorzugt von 70 bis 110 °C, aufweist; und ii) jedes Harz ein Kolophoniumesterharz ist, das aus der Gruppe ausgewählt ist, bestehend aus: Balsamkolophoniumesterharzen; hydrierten Balsamkolophoniumesterharzen; Extraktionskolophoniumesterharzen; hydrierten Extraktionskolophoniumesterharzen; Tallölkolophoniumesterharzen; und hydrierten Tallölkolophoniumesterharzen.

12. Band nach Anspruch 11, wobei die Klebstoffzusammensetzung ein erstes Kolophoniumesterharz, das einen Erweichungspunkt von 70 bis 90 °C aufweist, und ein zweites Kolophoniumesterharz umfasst, das einen Erweichungspunkt von 90 bis 110 °C aufweist.

13. Band nach einem der Ansprüche 1 bis 12, wobei das organische Lösungsmittel der Klebstoffzusammensetzung, bezogen auf das Gewicht des Lösungsmittels, mindestens 50 Gew.-% Ethylacetat umfasst.

14. Abgabevorrichtung, umfassend das Band nach einem der Ansprüche 1 bis 13.

15. Verwendung des Bandes nach einem der Ansprüche 1 bis 13 zum Reparieren oder Verbinden von Materialien, bevorzugt Textilmaterialien.

**Revendications**

1. Bande comprenant :

   i) une première doublure anti-adhésive ; et,
   ii) une couche adhésive sensible à la pression disposée sur ladite première doublure anti-adhésive, ladite couche adhésive sensible à la pression étant obtenue par durcissement d'une composition adhésive comprenant :

      a) un copolymère à base acrylique obtenu à partir d'un mélange de monomères comprenant au moins un ester alkylique en C1 à C12 de l'acide (méth)acrylique et au moins un monomère acide choisi parmi l'acide acrylique, l'acide méthacrylique, l'acide maléique, l'acide fumarique et l'acide itaconique ;
      b) un agent de réticulation de chélate métallique ;
      c) au moins une résine poisseuse ;
      d) un solvant organique ; et, éventuellement
      e) des additifs,

   ladite bande comprenant éventuellement iii) une seconde doublure anti-adhésive qui est disposée sur ce côté de ladite couche adhésive sensible à la pression opposée à ladite première doublure anti-adhésive.

2. Bande selon la revendication 1, ayant une largeur de 5 à 20 mm.

3. Bande selon la revendication 1 ou la revendication 2, dans laquelle la ou chaque doublure anti-adhésive comprend un film de support qui est muni sur une ou les deux côtés d'une couche anti-adhésive, de préférence dans laquelle le film de support comprend ou est constitué de polyéthylène téréphtalate et ladite couche anti-adhésive comprend ou est constitué d'un agent anti-adhérent en silicone.

4. Bande selon l'une quelconque des revendications 1 à 3, dans laquelle la couche adhésive sensible à la pression est **caractérisée par** :

   une épaisseur de film sec de 3 à 250 $\mu$m, de préférence de 10 à 200 $\mu$m ; et/ou,
   un poids de revêtement de 3 à 250 g/$m^2$, de préférence de 10 à 200 g/$m^2$.

5. Bande selon l'une quelconque des revendications 1 à 4, dans laquelle la couche adhésive sensible à la pression comprend, sur la base du poids total de la couche adhésive :

   de 30 à 90 % en poids, de préférence de 60 à 80 % en poids dudit copolymère à base acrylique ; et,
   de 1 à 70 % en poids, de préférence de 20 à 50 % en poids de ladite ou desdites résines poisseuses.

6. Bande selon l'une quelconque des revendications 1 à 5, dans laquelle la composition adhésive est à base de solvant.

7. Bande selon l'une quelconque des revendications 1 à 6, dans laquelle la composition adhésive comprend un copolymère à base acrylique obtenu à partir d'un mélange de monomères comprenant, en poids des monomères : de 70 à 99 % en poids d'un mélange d'au moins deux esters d'alkyle en C1 à C12 de l'acide (méth)acrylique ; et, de 1 à 30 % en poids dudit au moins un monomère d'acide.

8. Bande selon la revendication 7, dans laquelle la composition adhésive comprend un copolymère à base acrylique obtenu à partir d'un mélange de monomères constitué, en poids des monomères, de :

   a) 80 à 99 % en poids, de préférence de 90 à 99 % en poids, d'un mélange d'acrylate de 2-éthylhexyle et d'acrylate de n-butyle ; et,
   b) 1 à 20 % en poids, de préférence de 1 à 10 % en poids, d'acide acrylique.

9. Bande selon l'une quelconque des revendications 1 à 8, dans laquelle ledit agent de réticulation de chélate métallique est constitué d'au moins un complexe de :

   un métal choisi dans le groupe constitué par Al, Ti, Fe, Co, Ba, Zr, K et Zn ; et,
   un composé organique fournissant un ligand de 1,3-dicarbonyle.

10. Bande selon la revendication 9, dans laquelle ledit agent de réticulation de chélate métallique est l'acétylacétonate d'aluminium ou de titane.

11. Bande selon l'une quelconque des revendications 1 à 10, dans laquelle la composition adhésive comprend au moins une résine poisseuse, dans laquelle : i) chaque dite résine a un point de ramollissement de 50 à 130 °C, de préférence de 60 à 120 °C et plus préférablement de 70 à 110 °C ; et, ii) chaque dite résine est une résine d'ester de colophane choisie dans le groupe constitué par : les résines d'ester de colophane de gomme ; des résines d'ester de colophane de gomme hydrogénées ; des résines d'esters de colophane de bois ; des résines d'ester de colophane de bois hydrogénées ; des résines d'ester de colophane d'huile de pin ; et des résines ester de colophane d'huile de pin hydrogénées.

12. Bande selon la revendication 11, dans laquelle la composition adhésive comprend une première résine d'ester de colophane ayant un point de ramollissement de 70 à 90 °C et une seconde résine d'ester de colophane ayant un point de ramollissement de 90 à 110 °C.

13. Bande selon l'une quelconque des revendications 1 à 12, dans laquelle le solvant organique de la composition adhésive comprend, en poids du solvant, au moins 50 % en poids d'acétate d'éthyle.

14. Dispositif de distribution comprenant la bande telle que définie dans l'une quelconque des revendications 1 à 13.

15. Utilisation de la bande telle que définie dans l'une quelconque des revendications 1 à 13 pour la réparation ou la jonction de matériaux, de préférence de matériaux textiles.

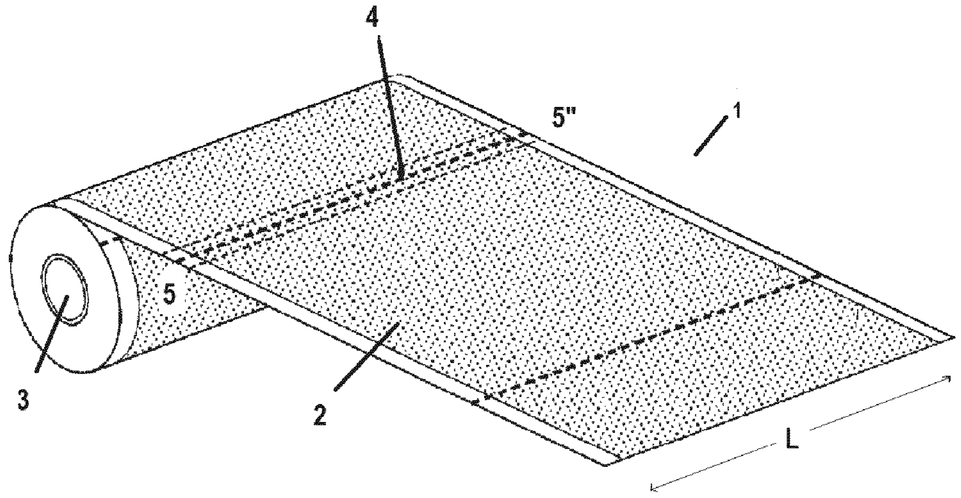


Fig. 1

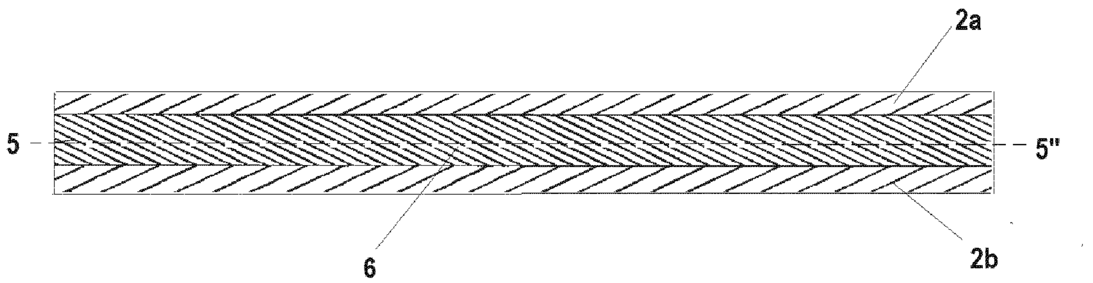


Fig. 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 29922950 U1
- US 2015299522 A1
- US 2011168319 A1, Baqai
- US 2910217 A
- US 3489324 A
- US 4130229 A
- EP 2559643 B1
- US 20090179061 A
- US 20100018653 A
- US 9254611 B
- US 3288482 A
- US 3527659 A
- US 4563539 A
- US 4576999 A
- US 4547431 A
- US 4279717 A
- US 5576356 A


### Non-patent literature cited in the description


- **B. CASSEL ; M. P. DIVITO.** Use of DSC To Obtain Accurate Thermodynamic and Kinetic Data. American Laboratory, January 1994, 14-19
- **B. WUNDERLICH.** Thermal Analysis. Academic Press, Inc, 1990
- Acrylic Adhesives. **D.R. GEHMAN.** Handbook of Adhesives. Van Nostrand Reinhold, 1990
- **SATAS et al.** Handbook of Pressure Sensitive Adhesives Technology. Satas & Associates, 1999, 632-651
- **KINNING et al.** Adhesion Science and Engineering-Volume 2: Surfaces, Chemistry & Applications. Elsevier, 2002, 535-571
- **JONES et al.** Handbook of Pressure Sensitive Adhesives Technology. Satas & Associates, 1999, 652-683